# EUROPÄISCHE PATENTSCHRIFT

(11) **EP 3 301 403 B1**
(45) Veröffentlichungstag und Bekanntmachung des Hinweises auf die Patenterteilung: **20.02.2019**
(21) Anmeldenummer: 17190668.8
(22) Anmeldetag: 12.09.2017
(51) Int. Cl.: G01D 5/48

(54) **POSITIONSSENSOR**
POSITION SENSOR
CAPTEUR DE POSITION

(30) Priorität: 29.09.2016 DE 102016118524
(43) Veröffentlichungstag der Anmeldung: 04.04.2018
(73) Patentinhaber: SICK ATech GmbH, 58453 Witten (DE)
(72) Erfinder: ISLAM AHMAD, Saiful, 58515 Lüdenscheid (DE)
(74) Vertreter: Manitz Finsterwald Patentanwälte PartmbB

(56) Entgegenhaltungen:
- EP-A2- 1 524 504
- US-A- 4 958 332
- US-A- 5 736 855
- US-A1- 2005 132 807
- US-B1- 6 232 769

## Beschreibung

Die vorliegende Erfindung betrifft einen Positionssensor mit einem Wellenleiter aus magnetostriktivem Material, der sich entlang einer Messstrecke erstreckt und zum Leiten von durch Magnetstriktion ausgelösten mechanischen Impulsen ausgebildet ist, und ein Verfahren zur Herstellung eines Dämpfungselementes an dem Wellenleiter eines solchen Positionssensors.

Solche Sensoren sind beispielsweise in der DE 197 53 805 C2 und in der Broschüre "Temposonics Position Sensors", 551019 A der Firma MTS (*www.mtssensors.com*/*fileadmin*/*media*/*pdfs*/*551019.pdf*) offenbart und werden insbesondere in der industriellen Messtechnik dazu eingesetzt, Positionen, Längen oder zurückgelegte Wege zu messen. Bei dem Wellenleiter kann es sich um einen dünnen Stab, einen Draht oder ein Rohr aus einem ferromagnetischen Material wie zum Beispiel Eisen, Nickel oder Kobalt handeln, der/das zum Beispiel wenige Zentimeter bis mehrere Meter lang sein kann. An dem Bauteil, dessen Position erfasst werden soll, ist üblicherweise ein so genannter "Positionsmagnet", beispielsweise in Form eines Dauermagneten, angebracht, der in dem Wellenleiter ein Magnetfeld erzeugt. Der Positionsmagnet kann beispielsweise ringförmig sein und den Wellenleiter umschließen. Wenn ein elektrischer Strompuls durch den Wellenleiter geschickt wird, wird in der Umgebung des Wellenleiters zusätzlich zu dem durch den Positionsmagneten erzeugten Magnetfeld ein weiteres, zeitlich und örtlich veränderliches Magnetfeld erzeugt. Durch Wechselwirkung der beiden Magnetfelder am Ort des Positionsmagneten kann ein mechanischer Impuls wie zum Beispiel ein Longitudinal- und/oder Torsionsimpuls in dem Wellenleiter erzeugt werden, der sich entlang der Messstrecke bewegt. Ein Messwandler des Positionssensors dient üblicherweise dazu, die von dem Wellenleiter geleiteten mechanischen Impulse in Positionssignale zu wandeln. Der Messwandler kann beispielsweise eine Spule oder ein piezoelektrisches Messelement umfassen. Der Messwandler kann zum Beispiel gestaltet sein wie in der EP 0 882 212 B1 beschrieben. Durch eine Laufzeitmessung des mechanischen Impulses kann letztlich die Position des Positionsmagneten ermittelt werden. Auf dem magnetostriktiven Messprinzip beruhende Positionssensoren arbeiten berührungslos und liefern Absolutwerte. Sie erfordern keine Nachkalibrierung und eignen sich auch für widrige Einsatzbedingungen. Häufig sind sie als Linearwegsensoren ausgestaltet. Eine Anwendung derartiger Positionssensoren innerhalb von Hydraulikzylindern, um deren Kolbenstellung zu detektieren, ist zum Beispiel in DE 20 2006 012 815 U1 beschrieben.

Die beschriebenen Longitudinal- oder Torsionspulse bewegen sich in dem Wellenleiter in beiden Richtungen von der Position des Positionsmagneten weg. An dem einen Ende des Wellenleiters werden sie mit Hilfe des Messwandlers detektiert, um mit der beschriebenen Laufzeitmessung die aktuelle Position des Positionsmagneten entlang des Wellenleiters zu bestimmen. Am anderen Ende muss möglichst effektiv verhindert werden, dass der Puls reflektiert wird und entlang des Wellenleiters zurückpropagiert. Dies würde die Detektion des direkt in Richtung des Messwandlers laufenden Pulses stören oder uneindeutig machen.

In EP 0 882 212 B1 sind dazu Elastomerhülsen beschrieben, auf das dem Messwandler entfernten Ende des Wellenleiters aufgesteckt sind. Elastomere mit unterschiedlichen Eigenschaften können aufeinanderfolgend aufgesteckt sein, um den Dämpfungseffekt anzupassen. So kann zunächst eine Hülse aus weichem Elastomer vorgesehen sein, die die Reflektion gering hält. Diese kann von Hülsen härteren Elastomers mit stärkerer Dämpfung gefolgt sein. Derartige Dämpfungslemente erfordern allerdings das aufwändige und komplizierte Aufschieben der Hülsen auf den in der Regel als Draht ausgestalteten Wellenleiter.

Bei anderen bekannten Lösungen wird ein elastomeres Material in einer Gussform um den Wellenleiter gegossen oder in einem Spritzgießprozess aufgebracht, wobei dabei eine Hülse aus einem Elastomer mit homogenen Eigenschaften entsteht.

In der DE 197 53 805 C2 ist ein Positionssensor offenbart, bei dem der Wellenleiter in einer Lagerung aus Isolierstoff gelagert ist. Bei der Montage wird eine Presshülse gemeinsam mit dem Isolierstoff auf den axialen Endbereich des Wellenleiters aufgepresst.

Die DE 696 34 988 T2 offenbart eine Wellenleiteraufhängung für einen akustischen Wandler, die eine Aufhängungshülse und ein Dämpfungselement umfasst. Dieses weist eine innere Hülse sowie ein Druckmittel zum Zusammenpressen der inneren Hülse auf und ist zwischen der Aufhängungshülse und dem entfernten Ende des Wellenleiters angeordnet.

Die US 6 232 769 B1 offenbart einen Positionssensor, bei dem der Wellenleiter in ein geschlossenes Rohr eingefädelt ist. Das Rohr ist wiederum in eine weitere Halterung eingelegt.

In der US 4 958 332 A ist ein magnetostriktiver Positionssensor offenbart, der ein Dämpfungselement in Form eines Gehäuses aufweist. In dem Gehäuse ist ein Hohlraum ausgebildet, der mit einem Dämpfungsmaterial gefüllt ist.

Es ist eine Aufgabe der Erfindung, einen leicht herstellbaren Positionssensor mit möglichst zuverlässiger Dämpfung des von dem Messwandler weglaufenden Pulses am Endes des Wellenleiters bereitzustellen.

Die Lösung der Aufgabe erfolgt durch einen Positionssensor mit den Merkmalen des Anspruchs 1.

Ein erfindungsgemäßer Positionssensor weist einen Wellenleiter aus magnetostriktiven Material auf, der sich entlang einer Messstrecke erstreckt und zum Leiten von durch Magnetostriktion ausgelösten mechanischen Impulsen ausgebildet ist. An einem ersten Ende des Wellenleiters ist der Messwandler vorgesehen, mit dessen Hilfe ein Strompuls in den Wellenleiter eingekoppelt werden kann und von dem Wellenleiter in Richtung des Messwandlers geleitete mechanische Impulse detektiert werden können. Wie beschrieben, entsteht ein solcher mechanischer Impuls in an sich bekannter Weise durch die Wechselwirkung des von dem Strompuls in dem Wellenleiter erzeugten Magnetfeldes mit einem Positionsmagneten, dessen Position detektiert werden soll.

Der Messwandler dient zum einen zum Einkoppeln des notwendigen Strompulses in den Wellenleiter und zum anderen zur Detektion des auf diese Weise erzeugten mechanischen Impulses, der sich in Richtung des Messwandlers bewegt. Aus der Laufzeit dieses mechanischen Impulses kann auf die Entfernung des die Reflexion erzeugenden Positionsmagneten geschlossen werden.

An dem zweiten Ende des Wellenleiters ist ein Dämpfungselement aus einem elastomeren Material vorgesehen, das zur Dämpfung eines in Richtung des zweiten Endes propagierenden mechanischen Impulses dient. Dieses Dämpfungselement soll die Reflexion dieses zweiten mechanischen Impulses möglichst gering halten, sodass er die Detektion des in Richtung des Messwandlers ausgesendeten mechanischen Impulses nicht stört.

Bei dem erfindungsgemäß ausgestalteten Positionssensor ist das Dämpfungselement mithilfe einer Gießprozesses direkt auf den Wellenleiter geformt, wobei die Härte des elastomeren Materiales mit zunehmender Entfernung vom Messwandler zunimmt. Während die Herstellung mit einem Gießprozess sehr einfach und präzise möglich ist, lässt sich ein entsprechendes Härteprofil in axialer Richtung des Wellenleiters damit sehr leicht einstellen. Durch die zunehmende Härte des elastomeren Materiales je größer die Entfernung zu dem Messwandler ist, lässt sich z.B. erreichen, dass der zu dämpfende mechanische Impuls in dem Wellenleiter zunächst auf elastomeres Material mit einer geringeren Härte trifft, sodass die Reflexionen bereits verringert sind. Durch die zunehmende Härte des elastomeren Materiales in dem Dämpfungselement wird die Dämpfung mit größerer Entfernung von dem Messwandler größer, sodass auf leichte Weise ein gewünschtes Dämpfungsverhalten einstellbar ist, das große Effektivität aufweist.

Die Erfindung eignet sich besonders gut in Verbindung mit Wellenleitern, die zum Leiten von durch Magnetostriktion ausgelösten Torsionsimpulsen ausgebildet sind.

Um die Materialeigenschaften des Dämpfungselements in axialer Richtung des Wellenleiters auf diese Weise einzustellen, ist erfindungsgemäß vorgesehen, dass das elastomere Material des Dämpfungselements aus wenigstens zwei Komponenten besteht, deren Mischungsverhältnis die Härte des elastomeren Materials bestimmt. Mit einem solchen Material ist die gewünschte Härte bzw. der gewünschte Härteverlauf des Dämpfungselements entlang des Wellenleiters sehr einfach einstellbar.

Es kann sich bei dem entsprechenden Material z.B. um eine Mischung aus zwei unterschiedlichen Komponenten handeln, deren Härte nach dem Aushärtprozess im Anschluss an den Gießprozess durch das Mischungsverhältnis der zwei Komponenten bestimmt ist.

Geeignet ist zum Beispiel Silikon, insbesondere mehrkomponentiges Silikon. Andere Materialien wie zum Beispiel Polyurethan sind ebenfalls denkbar.

Die Härte des für das Dämpfungselement zum Einsatz kommenden elastomeren Materials kann sich in axialer Richtung stufenweise verändern. Besonders vorteilhaft ist es jedoch, wenn sich die Härte in axialer Richtung mit dem Abstand von dem Messwandler kontinuierlich ändert, insbesondere linear steigert. Wenn die Härte des elastomeren Materials des Dämpfungselements sich aufgrund des Mischungsverhältnisses der verwendeten unterschiedlichen Komponenten ändert, kann dies auf einfache Weise dadurch erreicht werden, dass sich Mischungsverhältnis kontinuierlich mit der Entfernung von dem Messwandler ändert. Grundsätzlich ist es möglich, dass das elastomere Material des Dämpfungselementes als Gussteil um den Wellenleiter geformt ist. Ein besonders präzises Dämpfungselement mit präziser Änderung der Härte mit zunehmendem Abstand von dem Messwandler ist durch einen Spritzgussprozess an den Wellenleiter geformt.

Bei einem erfindungsgemäßen Positionssensor ist der Wellenleiter im Bereich des Dämpfungselements nicht-gerade ausgestaltet. Stattdessen kann zum Beispiel vorgesehen sein, dass der Wellenleiter sich in diesem Bereich wellenförmig, spiralförmig oder schraubenförmig erstreckt. Auf diese Weise erhöht sich die Dämpfungsstrecke, sodass sich ein zu dämpfender mechanischer Impuls länger innerhalb des Dämpfungselements aufhält, während er dort propagiert.

Eine solche Ausgestaltung des Wellenleiters im Bereich des Dämpfungselements lässt sich mit einem Gießprozess, insbesondere mit einem Spritzgießprozess, besonders einfach herstellen, da es nicht notwendig ist, eine Elastomerhülse auf den Wellenleiter aufzustecken, was bei einem nicht-geraden Wellenleiterbereich kaum möglich ist. Ein mit einem Gießprozess hergestelltes Dämpfungselement liegt trotzdem fest an dem nicht-gerade Wellenleiter an.

Die Erfindung betrifft auch ein Verfahren zum Herstellen eines Dämpfungselementes eines Positionssensors, der erfindungsgemäß ausgestaltet ist.

Bei dem erfindungsgemäßen Verfahren wird das elastomere Material des Dämpfungselements in einem Gießprozess um das zweite Ende des Wellenleiters gegossen. Eine besonders einfache und präzise Methode verwendet einen Spritzgießprozess.

Die Erfindung sieht vor, dass sich die Härte des Dämpfungselementes mit dem Abstand von dem Messwandler erhöht, indem bei dem Gießprozess ein Material zum Einsatz gebracht wird und das zwei unterschiedliche Komponenten umfasst, deren Mischungsverhältnis entlang des zu gießenden Dämpfungselementes in Abhängigkeit des Abstandes von dem Messwandler eingestellt wird. Werden hierzu zwei Komponenten verwendet, deren Härte nach dem Aushärtprozess unterschiedlich ist, kann durch die Einstellung des Mischungsverhältnisses die Härte des Dämpfungselements sehr präzise gewählt werden.

Vorteile und bevorzugte Ausgestaltungen des erfindungsgemäßen Verfahrens ergeben sich auch aus der obigen Schilderung der Vorteile und bevorzugten Ausführungsformen des erfindungsgemäßen Positionssensors.

Weiterbildungen der Erfindung sind auch in den abhängigen Ansprüchen, der Beschreibung sowie den beigefügten Zeichnungen angegeben.

Die Erfindung wird nachfolgend beispielhaft unter Bezugnahme auf die Zeichnungen beschrieben.
- Fig. 1: ist eine Explosionsdarstellung eines erfindungsgemäßen Positionssensors.
- Fig. 2: ist eine erläuternde Querschnittdarstellung eines Wellenleiters im eingebauten Zustand.
- Fig. 3: ist eine schematische Darstellung eines Dämpfungselements einer ersten Ausführungsform des Positionssensors.
- Fig. 4: ist eine schematische Darstellung eines Dämpfungselements einer zweiten Ausführungsform des Positionssensors.
- Fig. 5: ist eine schematische Darstellung eines Dämpfungselements einer dritten Ausführungsform des Positionssensors.
- Fig. 6: ist eine schematische Darstellung eines Dämpfungselements einer vierten Ausführungsform des Positionssensors.
- Fig. 7: ist eine schematische Darstellung eines Dämpfungselements einer fünften Ausführungsform des Positionssensors.
- Fig. 8: ist eine schematische Darstellung eines Dämpfungselements einer sechsten Ausführungsform des Positionssensors.

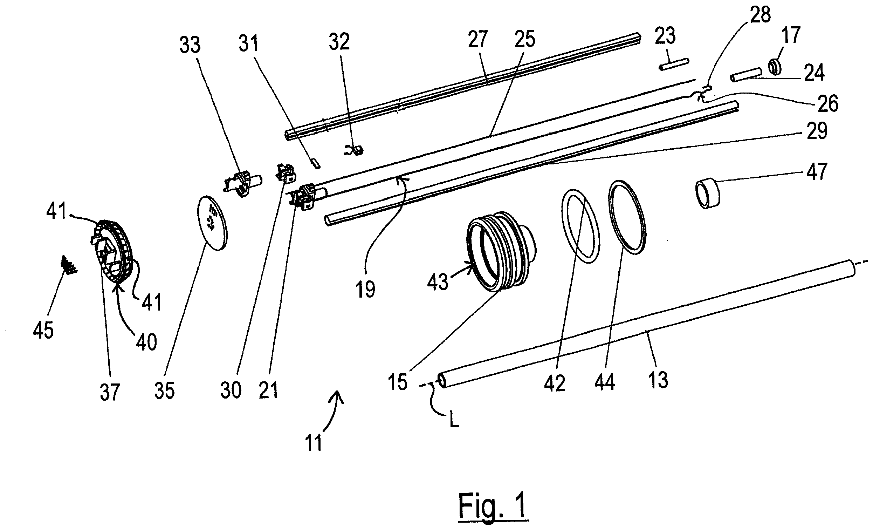

Der in Fig. 1 in Explosionsdarstellung gezeigte Positionssensor 11 umfasst ein Wellenleitergehäuse 13 in Form eines langgestreckten Rohrs aus Edelstahl, an dessen einem Rohrende ein Sensorkopfgehäuse 15 angebracht ist. Das andere Rohrende ist durch eine Endkappe 17 verschlossen. In dem Wellenleitergehäuse 13 befindet sich ein Wellenleiter 19 aus einem magnetostriktiven Material. Der Wellenleiter 19 ist vorzugsweise ein Draht aus ferromagnetischem Material und erstreckt sich ausgehend von einer Steuerungseinheit 21 axial, das heißt parallel zur Längsachse L des Wellenleitergehäuses 13 durch dieses hindurch bis zu einem Dämpfungselement 23, das unter Verwendung einer Hülse 24 in dem Wellenleitergehäuse 13 gehalten ist. Die Hülse 24 kann zum Beispiel die Spritzgussform sein, in der das Dämpfungselement 23 in noch zu beschreibender Form gegossen wird. Im Bereich des Dämpfungselements 23 geht der Wellenleiter 19 über einen gebogenen Bereich 28 in einen Rückleiter 25 über, der wieder zur Steuerungseinheit 21 zurückführt. Der Wellenleiter 19 ist mittels eines Positionierelements 27 und eines Zwischenrohrs 29 in dem Wellenleitergehäuse 13 gehalten. Im Bereich des Dämpfungselementes 23 ist der Wellenleiter 19 gewellt ausgestaltet um die Dämpfungsstrecke zu vergrößern.

Der Steuerungseinheit 21 ist ein Messwandler 30 zugeordnet, der einen am Wellenleiter 19 festgelöteten Stabmagneten 31 und eine diesen umschließende Spule 32 umfasst. Der Messwandler 30 ist in der Lage, von dem Wellenleiter 19 geleitete Torsionsimpulse in elektrische Positionssignale zu wandeln, wie dies grundsätzlich beispielsweise aus der EP 0 882 212 B1 bekannt ist. Dem Messwandler 30 ist eine Messwandler-Aufnahme 33 zugeordnet, die ebenso wie die Steuerungseinheit 21 an einer Leiterplatte 35 angebracht ist. Folgende Einzelteile der Steuerungseinheit 21 sind in Fig. 1 der Übersichtlichkeit halber seitlich neben der Steuerungseinheit 21 noch einmal gesondert dargestellt: Messwandler 30, Stabmagnet 31, Spule 32 und Messwandler-Aufnahme 33.

Die Leiterplatte 35 mit den daran montierten Komponenten ist im Sensorkopfgehäuse 15 untergebracht. Dieses ist durch ein Deckelteil 37 verschlossen, welches an seinem Rand 40 mit Rastzähnen 41 versehen ist. Die Rastzähne 41 sind zum Hintergreifen eines nach innen vorstehenden Wulstes 43 des Sensorkopfgehäuses 15 ausgebildet. Das Deckelteil 37 kann somit auf das Sensorkopfgehäuse 15 aufgesteckt und beim Aufstecken dauerhaft mit diesem verrastet werden. Das Sensorkopfgehäuse 15 kann unter Verwendung eines Dichtrings 42 und eines Stützrings 44 in einen Hydraulikzylinder eingebaut werden, wie dies zum Beispiel in der DE 20 2006 012 815 U1 offenbart ist.

Für den Anschluss des Positionssensors 11 an eine Stromversorgung und an eine Empfangseinheit (beide nicht dargestellt) sind Kontaktstifte 45 am Deckelteil 37 vorgesehen. Diese sind wie dargestellt abgewinkelt, um das Anschließen eines Verbindungssteckers oder einer Verbindungsbuchse von der Seite aus zu ermöglichen. Die durch den Positionssensor 11 zu erfassende Position ist durch einen Positionsmagneten 47 markiert, der hier ringförmig ist und das Wellenleitergehäuse 13 umschließt. Der Positionsmagnet 47 ist an einem nicht dargestellten Bauteil befestigt, dessen Position erfasst werden soll, z. B. an einem verschiebbaren Kolben eines Hydraulikzylinders.

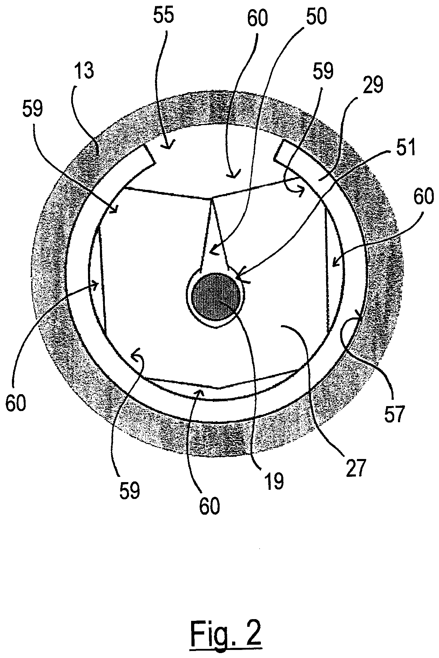

Fig. 2 zeigt den Wellenleiter 19 und das Positionierelement 27 in einer Querschnittsansicht im eingebauten Zustand. Das Positionierelement 27 ist aus einem elastischen und nicht-magnetischen Material, z.B. aus Silikon, gefertigt und daher verformbar. Wenn es sich in dem hier nicht gezeigten unverformten Ausgangszustand befindet, weist es eine trapezartige äußere Querschnittsform auf. Eine Aussparung 50 mit schlüssellochartiger Querschnittsform erstreckt sich in axialer Richtung durch das gesamte Positionierelement 27 hindurch. Der Wellenleiter 19 ist dann in dem breiten Aufnahmeausschnitt 51 der Aussparung 50 angeordnet. Im eingebauten Zustand, der in Fig. 2 im Querschnitt gezeigt ist, ist das Positionierelement 27 zusammengedrückt und "klemmt" in dem Zwischenrohr 29, das z.B. aus Polytetrafluoräthylen gefertigt ist. Die durch den Wellenleiter 19, das Positionierelement 27 und das Zwischenrohr 29 gebildete Einheit steckt im eingebauten Zustand in dem Wellenleitergehäuse 13. Das Zwischenrohr 29 liegt bei dem gezeigten Beispiel vollflächig an den Innenwand 57 des Gehäuses 13 an. Aufgrund des im unverformten Zustand trapezförmigen Außenquerschnitts des Positionierelementes 27 liegt dieses nicht vollflächig an dem Zwischenrohr 29 an, sondern lediglich an den Eckbereichen 59. Zwischen diesen sind Freiräume 60 gebildet, die zum Durchführen von elektrischen Leitungen sowie des Rückleiters 25 (Fig.1) genutzt werden können. Durch das Positionierelement 27 sowie das Zwischenrohr 29 ist der Wellenleiter 19 bei diesem Beispiel einerseits zentriert in dem Wellenleitergehäuse 13 gehalten und andererseits vor übermäßigen Auslenkungen, Stößen und Schwingungen geschützt.

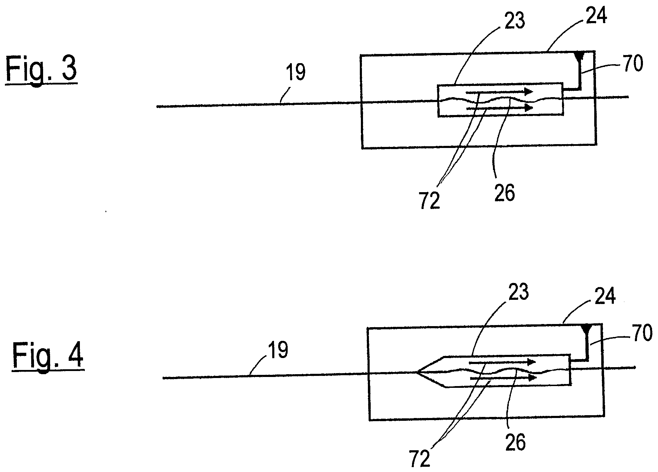

Die Fig. 3 bis 8 zeigen Dämpfungselemente unterschiedlicher Ausführungsformen des Positioniersensors.

In Fig. 1 ist dieser Bereich des Positionssensors rechts oben gezeigt, in dem das Dämpfungselement 23 und die es umgebende Hülse 24 in der Explosionsdarstellung der Fig. 1 erkennbar sind. In Fig. 1 ist eine Ausführungsform gezeigt, wie sie in Fig. 3 dargestellt ist.

Fig. 3 zeigt diesen Bereich des Positionssensors 11 in schematischer Darstellung in größerem Detail. Erkennbar ist der Wellenleiter 19, der im Bereich 26 wellenförmig ausgestaltet ist. Er ist von einer Gussform 24 umgeben. Durch den Einspritzkanal 70 kann in diese Gussform z.B. zweikomponentiges Silikon eingespritzt werden, das den wellenförmig geformten Wellenleiter 19 in dem gezeigten Hohlraum nach dem Spritzgieß- und dem Aushärtprozeß umgibt. Auf diese Weise wird durch das eingespritzte Material nach einem entsprechend gewählten Aushärtprozess ein Dämpfungselement 23. Je nach Ausgestaltung kann die Gussform 24 an dem Wellenleiter verbleiben oder entfernt werden. Während des Einspritzprozesses durch den Einspritzkanal 70 wird das Mischungsverhältnis der zwei Silikonkomponenten des eingespritzten Materiales kontinuierlich verändert. Auf diese Weise ändert sich die Härte des ausgehärteten Materials, wenn die Komponenten so gewählt sind, dass eine der Komponenten nach dem Aushärten eine größere Härte aufweist als die andere. So können die zwei Komponenten des Silikons z.B. so gewählt sein, dass sich bei einem Verhältnis von 1:1 eine Härte von weniger als einer Shore-Härte 0 einstellt, wohingegen sich bei einem Mischverhältnis von 2:1 eine Shore-Härte von 30 einstellt. Die Härte des Dämpfungselementes 23 wird dabei so eingestellt, dass sie in der gezeigten Pfeilrichtung 72 zunimmt. Wenn die Härte in Pfeilrichtung ansteigt, wird ein mechanischer Impuls, der in Fig. 3 von links entlang des Wellenleiters 19 propagiert, zunächst auf ein sehr weiches elastomeres Material treffen um die Reflexion zu minimieren, wobei das Material entlang der Strecke nach rechts aufgrund der größeren Dichte härter wird und zu einer stärkeren Dämpfung führt.

Fig. 4 zeigt ein Dämpfungselement 23 einer anderen Ausführungsform, bei der die Gussform 24 im linken Bereich des Dämpfungselementes 23 einen konischen Verlauf hat, um eine weitere Anpassungsmöglichkeit an die Dämpfungsnotwendigkeiten zu bieten. In nicht gezeigter Weise können auch andere Formen gewählt werden um eine Anpassung an die Gegebenheiten zu optimieren.

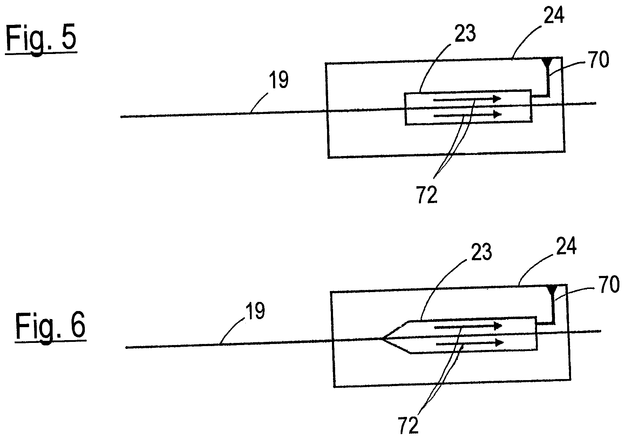

Fig. 5 zeigt eine Ausgestaltung, bei der der Wellenleiter im Bereich des Dämpfungselements keine gewellte Form hat, sondern sich gerade durch das Dämpfungselement hindurch erstreckt.

Fig. 6 zeigt eine Ausführungsform, die der Ausgestaltung der Fig. 4 mit geradem Wellenleiter entspricht.

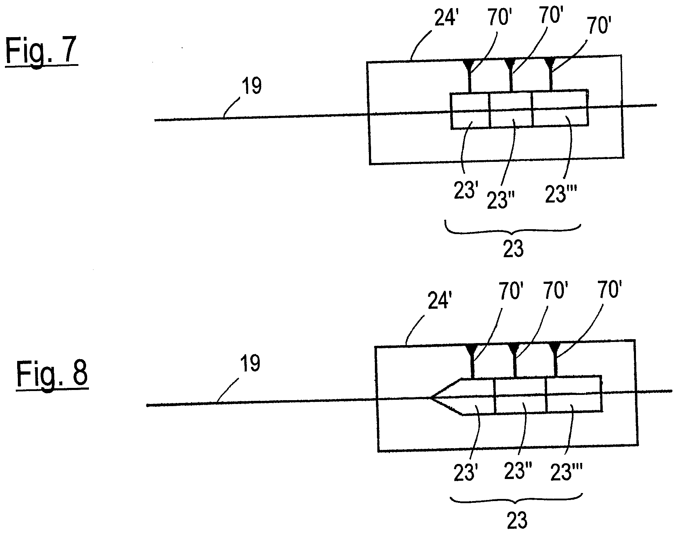

Fig. 7 zeigt eine weitere Ausführungsform, bei der das Dämpfungselement 23 aus Einzelelementen 23', 23" und 23"' besteht. Diese werden in einer speziellen Form 24' erzeugt, bei der das zweikomponentige Silikon zur Erzeugung des Dämpfungselementes 23 durch drei Einspritzkanäle 70' eingebracht wird. Dabei wird für die unterschiedlichen Bereiche 23', 23", 23"' ein unterschiedliches Mischungsverhältnis für die zwei Komponenten des Silikons gewählt. Auf diese Weise kann ein stufenförmiger Anstieg der Härte des Dämpfungselementes 23 erreicht werden.

Mit der Erfindung ist ein Dämpfungselement möglich, dass es die Vorteile eines einfachen Gießprozesses bei der Herstellung mit den Vorteilen eines Dämpfungselementes mit in axialer Richtung ansteigender Härte kombiniert.

Die vorliegende Beschreibung nennt mehrheitlich Silikon, insbesondere z.B. mehrkomponentiges Silikon. Andere Materialien mit entsprechenden Eigenschaften sind ebenfalls einsetzbar, zum Beispiel Polyurethan.

### Bezugszeichenliste

- 11: Positionssensor
- 13: Wellenleitergehäuse
- 15: Sensorkopfgehäuse
- 17: Endkappe
- 19: Wellenleiter
- 21: Steuerungseinheit
- 23: Dämpfungselement
- 23', 23", 23"': Einzelelement
- 24: Hülse
- 25: Rückleiter
- 27: Positionierelement
- 28: umgebogener Bereich
- 29: Zwischenrohr
- 29': Anordnung
- 30: Messwandler
- 31: Stabmagnet
- 32: Spule
- 33: Messwandler-Aufnahme
- 35: Leiterplatte
- 37: Deckelteil
- 40: Rand
- 41: Rastzahn
- 42: Dichtring
- 43: Wulst
- 44: Stützring
- 45: Kontaktstift
- 47: Positionsmagnet
- 50: Aussparung
- 51: Aufnahmeabschnitt
- 57: Innenwand
- 59: Eckbereich
- 60: Freiraum
- 70: Einspritzkanal
- 72: Härteanstieg
- L: Längsachse

## Patentansprüche

1. Positionssensor (11) mit
- einem Wellenleiter (19) aus magnetostriktivem Material, der sich entlang einer Messstrecke erstreckt und zum Leiten von durch Magnetostriktion ausgelösten mechanischen Impulsen ausgebildet ist,
- einem Messwandler (30) an einem ersten Ende des Wellenleiters (13) zur Einkopplung eines Strompulses in den Wellenleiter (19) und zur Detektion eines von dem Wellenleiter (19) in Richtung des Messwandlers (30) geleiteten mechanischen Impulses, und
- einem Dämpfungselement (23) aus einem elastomeren Material an einem zweiten Ende des Wellenleiters (19) zur Dämpfung eines in Richtung des zweiten Endes propagierenden mechanischen Impulses,
wobei das elastomere Material mit Hilfe eines Gießprozesses direkt an den Wellenleiter (19) geformt ist,
**dadurch gekennzeichnet, dass**
die Härte des elastomeren Materials mit zunehmender Entfernung vom Messwandler (30) zunimmt, dass
das elastomere Material ein Material aus wenigstens zwei Komponenten ist, deren Mischungsverhältnis die Härte des elastomeren Materials bestimmt, und dass
der Wellenleiter (19) innerhalb des Dämpfungselementes (23) einen nicht-geraden Verlauf zur Verlängerung der Dämpfungsstrecke aufweist.

2. Positionssensor (11) nach Anspruch 1, **dadurch gekennzeichnet, dass** die Härte des elastomeren Materiales in dem Dämpfungselement (23) mit zunehmender Entfernung von dem Messwandler (30) kontinuierlich zunimmt.

3. Positionssensor (11) nach den Ansprüchen 1 und 2, **dadurch gekennzeichnet, dass** sich das Mischungsverhältnis der Komponenten in dem Dämpfungselement (23) kontinuierlich mit der Entfernung von dem Messwandler (30) ändert.

4. Positionssensor (11) nach einem der vorhergehenden Ansprüche, **dadurch gekennzeichnet, dass** das elastomere Material mit Hilfe eines Spritzgießprozesses auf den Wellenleiter (19) geformt ist.

5. Verfahren zur Herstellung eines Positionssensors (11) gemäß einem der vorhergehenden Ansprüche, bei dem ein elastomeres Material in einem Gießprozess um das zweite Ende des Wellenleiters (19) gegossen wird und der Gießprozess das Gießen eines Gießmateriales mit wenigstens zwei unterschiedlichen Komponenten umfasst, deren Mischungsverhältnis entlang des zu gießenden Dämpfungselementes (23) in Abhängigkeit des Abstandes von dem Messwandler (30) eingestellt wird.

6. Verfahren nach Anspruch 5, **dadurch gekennzeichnet, dass** das elastomere Material um das zweite Ende des Wellenleiters spritzgegossen wird.

7. Verfahren nach Anspruch 6, **dadurch gekennzeichnet, dass** das Mischungsverhältnis in Abhängigkeit des Abstandes von dem Messwandler (30) kontinuierlich geändert wird.

8. Verfahren nach einem der Ansprüche 6 oder 7, **dadurch gekennzeichnet, dass** das Gießmaterial ein wenigstens zweikomponentiges Silikonmaterial umfasst.

## Claims

1. A position sensor (11) comprising
- a waveguide (19) of magnetostrictive material which extends along a measurement path and which is configured for conducting mechanical pulses triggered by magnetostriction;
- a transducer (30) at a first end of the waveguide (13) for coupling a current pulse into the waveguide (19) and for detecting a mechanical pulse conducted by the waveguide (19) in the direction of the transducer (30); and
- a damping element (23) of an elastomer material at a second end of the waveguide (19) for damping a mechanical pulse propagating in the direction of the second end,
wherein the elastomer material is formed directly at the waveguide (19) with the aid of a casting process,
**characterized in that**
the hardness of the elastomer material increases as the distance from the transducer (30) increases;
**in that** the elastomer material is a material comprising at least two components whose mixing ratio determines the hardness of the elastomer material; and
**in that** the waveguide (19) has a non-linear extent within the damping element (23) to extend the damping path.

2. A position sensor (11) in accordance with claim 1, **characterized in that** the hardness of the elastomer material in the damping element (23) increases continuously as the distance from the transducer (30) increases.

3. A position sensor (11) in accordance with claims 1 and 2, **characterized in that** the mixing ratio of the components in the damping element (23) changes continuously with the distance from the transducer (30).

4. A position sensor (11) in accordance with any one of the preceding claims, **characterized in that** the elastomer material is formed onto the waveguide (19) with the aid of an injection molding process.

5. A method of manufacturing a position sensor (11) in accordance with any one of the preceding claims, in which an elastomer material is cast around the second end of the waveguide (19) in a casting process and the casting process comprises the casting of a casting material comprising at least two different components whose mixing ratio is set along the damping element (23) to be cast in dependence on the spacing from the transducer (30).

6. A method in accordance with claim 5, **characterized in that** the elastomer material is injection molded around the second end of the waveguide.

7. A method in accordance with claim 6, **characterized in that** the mixing ratio is changed continuously in dependence on the spacing from the transducer (30).

8. A method in accordance with one of the claims 6 or 7, **characterized in that** the casting material comprises an at least two-component silicone material.

## Revendications

1. Capteur de position (11), comportant
- un guide d'ondes (19) en matériau magnétostrictif qui s'étend le long d'un trajet de mesure et qui est réalisé pour transmettre des impulsions mécaniques déclenchées par magnétostriction,
- un transducteur (30) à une première extrémité du guide d'ondes (13) pour injecter une impulsion de courant dans le guide d'ondes (19) et pour détecter une impulsion mécanique transmise du guide d'ondes (19) en direction du transducteur (30), et
- un élément d'atténuation (23) en un matériau élastomère à une seconde extrémité du guide d'ondes (19) pour atténuer une impulsion mécanique qui se propage en direction de la seconde extrémité,
le matériau élastomère étant moulé directement sur le guide d'ondes (19) au moyen d'un processus de coulée,
**caractérisé en ce que**
la dureté du matériau élastomère augmente au fur et à mesure de l'éloignement du transducteur (30),
le matériau élastomère est un matériau à deux composants dont le rapport de mélange détermine la dureté du matériau élastomère, et **en ce que** le guide d'ondes (19) présente une allure non rectiligne à l'intérieur de l'élément d'atténuation (23) pour allonger le trajet d'atténuation.

2. Capteur de position (11) selon la revendication 1,
**caractérisé en ce que**
la dureté du matériau élastomère dans l'élément d'atténuation (23) augmente en continu au fur et à mesure de l'éloignement du transducteur (30).

3. Capteur de position (11) selon les revendications 1 et 2,
**caractérisé en ce que**
le rapport de mélange des composants dans l'élément d'atténuation (23) varie en continu au fur et à mesure de l'éloignement du transducteur (30).

4. Capteur de position (11) selon l'une des revendications précédentes,
**caractérisé en ce que**
le matériau élastomère est moulé sur le guide d'ondes (19) à l'aide d'un processus de coulée par injection.

5. Procédé pour réaliser un capteur de position (11) selon l'une des revendications précédentes,
dans lequel
un matériau élastomère est coulé autour de la seconde extrémité du guide d'ondes (19) dans un processus de coulée, et le processus de coulée comprend la coulée d'un matériau de coulée à au moins deux composants différents dont le rapport de mélange le long de l'élément d'atténuation (23) à couler est réglé en fonction de la distance du transducteur (30).

6. Procédé selon la revendication 5,
**caractérisé en ce que**
le matériau élastomère est coulé par injection autour de la seconde extrémité du guide d'ondes.

7. Procédé selon la revendication 6,
**caractérisé en ce que**
le rapport de mélange est modifié en continu en fonction de la distance du transducteur (30).

8. Procédé selon l'une des revendications 6 ou 7,
**caractérisé en ce que**
le matériau de coulée comprend un matériau de silicone à au moins deux composants.
